# EUROPEAN PATENT SPECIFICATION

(11) **EP 4 203 691 B1**
(45) Date of publication and mention of the grant of the patent: **15.07.2026**
(21) Application number: 21786281.2
(22) Date of filing: 26.08.2021
(51) Int. Cl.: A23B 4/052, A23B 4/044, A47J 37/06

(54) **PROCESS AND SYSTEM FOR SMOKING FOOD WITH REDUCED GAS ODORS AND IMPROVED FLAVOR**
VERFAHREN UND SYSTEM ZUM RÄUCHERN VON LEBENSMITTELN MIT VERRINGERTEN GASGERÜCHEN UND VERBESSERTEM GESCHMACK
PROCEDÉ ET SYSTÈME POUR FUMER DES ALIMENTS AVEC RÉDUCTION DES ODEURS DE GAZ ET AMÉLIORATION DU GOÛT

(30) Priority: 27.08.2020 US 202063070919 P
(43) Date of publication of application: 05.07.2023
(73) Proprietor: CRESCENT CITY SEAFOOD INC., Hilo, HI 96720 (US)
(72) Inventor: KOWALSKI, William R., Honolulu, Hawaii 96815 (US)
(74) Representative: Manuel Illescas y Asociados, S.L.U.
(86) International application number: PCT/US2021/047761
(87) International publication number: WO 2022/047036

(56) References cited:
- EP-A1- 2 742 809
- EP-A1- 3 305 082
- WO-A1-01/10966
- WO-A1-2018/213154
- CN-A- 110 810 492
- DE-A1- 3 826 211
- US-A- 5 972 401
- US-A1- 2006 117 964
- PARKER JANE K. ET AL: "Development of a Zeolite Filter for Removing Polycyclic Aromatic Hydrocarbons (PAHs) from Smoke and Smoked Ingredients while Retaining the Smoky Flavor", JOURNAL OF AGRICULTURAL AND FOOD CHEMISTRY, vol. 66, no. 10, 14 March 2018 (2018-03-14), US, pages 2449 - 2458, XP055864737, ISSN: 0021-8561, ISBN: 978-4-86233-281-3, Retrieved from the Internet <URL:https://pubs.acs.org/doi/pdf/10.1021/acs.jafc.6b05399> DOI: 10.1021/acs.jafc.6b05399

## Description

### BACKGROUND

### a) Field

The subject matter disclosed herein relates to a process and system for smoking food. The process is directed towards the reduction of distasteful gas compounds in aerosol smoke that cause unwanted gas odors and flavors in subsequently smoked foods. The method is further effective in preserving the freshness, wholesomeness, and appearance of smoked seafood and meat by retaining the desirable preservative aerosol components of the smoke. A superior smoke aroma and flavor can be imparted to seafood and meat, without the interference of distasteful gases odors. The process is further highly efficient, by incorporation of condensation filtering to regulate water, collect, and recycle smoke flavoring liquid condensates, thereby maximizing the value recovery from the smoking system.

### b) Related Prior Art

Many kinds of cold smoking have been developed, with variations in the outcome. Various different smoking methods endeavor to produce a unique and desirable result. Natural smoke has long been used to preserve the nutritive components and wholesomeness of meats and seafood while imparting a desirable smoke aroma and flavor. Smoked seafood can benefit from the addition of characteristic smoke odor and flavor, preservation of freshness and color, plus inhibiting microorganism growth and anti-oxidation of lipids.

Smoked seafood and meats are popular worldwide. The revenue of the smoked salmon market in the European Union alone amounted to $4.3 billion in 2018. Amongst the main consuming countries in the EU were France, Italy, and Germany. These countries comprise a combined 48% share of total market. The UK, Belgium, Spain, Romania, Denmark, the Netherlands, Austria, Hungary and Poland consume somewhat less, together comprising a further 42%. Smoked tuna is increasing in popularity in EU, Japan, and USA.

Smoked seafood has the advantage of preserving fresh-like characteristics of the seafood, including prevention of microorganisms in the meat, creation of antioxidant effects on the lipids, absorption of antibacterial substances from the smoke into the flesh and retention of color.

It is known in the art that use of pure undiluted aerosol smoke in the smoking process of seafood induces certain distasteful odors and flavors. Therefore, there is a need to reduce the perception of undesirable odors from gas compounds that cause distasteful and foul gas odors in aerosol smoke.

The smoked seafood and meat industry has not devoted attention or taken action to reduce gas compounds in aerosol smoke that have a distasteful odor. The unwanted gas odors can sometimes be overshadowed by traditional smoke flavoring compounds such phenols, to varying degrees, because smoke odors and flavors are conglomerates, which can blend together and disguise distasteful gas odors. However, the traditional smoke flavor in seafood was found to be more desirable when the distasteful odor gas compounds were reduced.

Undesirable gas odors may also be reduced by dilution of the aerosol smoke with air commonly observed in concentrations greater than 10 parts air to 1 part aerosol smoke. However, such substantial dilution results in the disadvantage of also weakening the beneficial preservative components of the smoke.

Another way to remove gas compounds with objectionable odors is elimination of aerosol smoke completely and applying "liquid smoke". This method is commonly applied in brine, adding characteristic smoke flavor to the food, but suffers a disadvantage without the valuable preservative gas compounds in the aerosol smoke.

Other methods introduce air into the pyrolysis process of hard woods, which changes the physical characteristics of the smoke.

It is known in the art that some methods of smoking apply gaseous smoke through needle injection, in which case the gas compounds can become trapped inside the flesh, further accelerating the potential for unwanted gas odors.

Other methods are known. For example, international publication WO 2018/213154 A1 discloses a method for modulating the flavor profile of a food. It discloses using a molecular sieve or a combination of molecular sieves to remove or adsorb all or a portion of one or more flavor compounds. This prior art is directed towards modulating vaporous compounds which are liquids at room temperature. Passing smoke through molecular sieve for the purpose of removing Polycyclic Aromatic Hydrocarbons (PAHs) and smoke flavors identified as phenols, carbonyls are also disclosed. However, this art fails to disclose any awareness of odorous gas compounds in aerosol smoke, odor character, need, or method for reduction of objectionable gases. This prior art document does not disclose how to retain the precious aerosol smoke, with its preservative gases, or apply aerosol gas to seafood or meat.

European Patent EP 2 742809B1 discloses a method and apparatus for cold smoking meat and seafood. Hardwoods are traditionally used to make smoke for smoking foods because they produce a pleasant smelling smoke. The art disclosed therein seeks reduce reliance on hardwoods to reduce cost and to more conveniently make smoke in locations where hardwood trees do not grow. The art seek reducing reliance on hardwoods by generating smoke from cheaper soft woods that are not usually used for smoking foods because they produce smoke with a harsh smell. The art disclosed therein filters that smoke to reduce the harsh smell, then combines said filtered smoke with a smaller quantity of unfiltered smoke made from a hardwood. This prior art document does not teach removal of odor-imparting gases in smoke, including smoke from hardwoods.

U.S. Patent 5972401 discloses a process of manufacturing tasteless super-purified smoke for treating seafood to preserve the freshness, color, and natural flavor. The smoke is super-purified by removing the high quantity of particulate matter and smoke taste imparting vapors to produce a substantially tasteless smoke that will not impart a smoked taste to treated food. The art disclosed therein reduces the phenol fraction that imparts a traditional smoke flavor to below taste and odor thresholds. However, this prior art document fails to identify and remove unwanted gas compounds that exist after phenols are reduced in smoke, or imparting a smoke taste to food.

U.S. Patent 5,013,567 discloses a method and equipment for the generation of smoke for smoke-curing of goods. The smoke is generated by means of the top-burning technique, whereby the smoke is recovered only when there is a layer of coals that has been produced atop the burning fuel. Said layer has a thickness of about 0.5 to 100 mm above the layer of fuel. The layer of coals acts as a regulator of the flow of combustion air, so that the burning takes place at a lower temperature that minimizes the formation of cancer-causing or other detrimental substances, and the layer of coals also acts as a filter to remove detrimental substances, e.g., benzo-a-pyrene, that formed in the smoke despite the lower temperature. This prior art document does not disclose the reduction of objectionable gas compounds. Furthermore, from 0.5mm to 100 mm of char is inadequate for removal of gas odors in the smoke.

U.S. Patent 5,484,619 discloses a cold smoking method to sterilize and prevent decomposition and discoloration. The smoked fish and meat pick up agreeable taste and flavors, and remain wholesome when kept at easily obtainable cold-storage temperatures. The smoke is generated by burning a smoking material at 250° C to 400° C and is passed through a filter to remove tar. The smoke is then cooled to between 0° and 5° C and exposed to seafood. Yamaoka applies all of the smoke, except for tar, to the meat and seafood, without removal of distasteful odor-causing gases.

U.S Patent 5,637,339 discloses a method of making a tar depleted liquid smoke. Liquid smoke condensates pass through an activated carbon filter to produce a totally water miscible tar-depleted liquid smoke composition having a phenol content with a tar-depleted liquid smoke composition. The art disclosed therein is a liquid smoke flavoring process which are known to not, when compared to aerosol smoke compounds, preserve seafood and meat as well. This prior document does not teach removal of undesirable odor gas compounds.

U.S. Patent Application No.: 20120006193 discloses an apparatus and process for thermally-linked adsorption-desorption for removing one or more components from a flow stream. More specifically, this prior art document discloses an apparatus and a combined adsorption and desorption process for removing carbon dioxide, a volatile organic compounds (VOC) or water from a gaseous flow stream. Such apparatus is intended to be employed, preferably, in a spacecraft and in an astronaut's ventilation loop systems.

European patent application No. EP 3 305 082 discloses a method using a size exclusion filter with pores between 0.3 nm to 1 nm, typically made of zeolite, to selectively remove chemical contaminants such as polycyclic aromatic hydrocarbons (PAHs) from smoke and smoked food while retaining desirable flavor components, by passing smoke through the filter or directly contacting food with it.

Accordingly, there is a need for an apparatus and process for smoking food that reduces gas compounds having distasteful odours while retaining preservative gas components of aerosol smoke and imparting a traditional smoke flavour to the food.

### SUMMARY

The present invention improves the smoking process by reducing or eliminating gas compounds that elicit unwanted odors. In some embodiments , this invention is especially beneficial for the lightly cold smoking of seafood. Unwanted gas odors and flavors are more pronounced in lightly smoked seafood while further seafood has a mild flavor profile compared to meats. The present invention endeavors to produce a pure high quality smoke, with improved smoke aroma characteristics, through pyrolysis in an oxygen restricted environment. The present invention does not seek to reduce reliance on hardwoods and does not use inferior softwood to make harsh smoke that is filtered and then blended with unfiltered smoke from hardwoods.

The invention provides a process for smoking food as described in any one of claims 1 to 5.

Particularly, the invention provides a process for smoking food according to claim 1.

According to an embodiment, the organic material may be hardwood traditionally used for smoke flavoring food.

According to the invention, the water in the aerosol smoke is reduced by condensation in order to collect condensates while maintaining desirable smoke components.

According to an embodiment, supplemental traditional smoke flavor compounds may be added to the aerosol smoke.

According to an embodiment, supplemental traditional smoke flavor compounds may be added to the food.

Additionally, the invention provides a system for smoking food as described in any one of claims 6 to 15.

Particularly, the invention provides a system for smoking food according to claim 6.

According to an embodiment, there is provided a system for smoking food comprising: a smoke generator comprising a hopper to supply an organic smoking material, a cooking oven configured to heat organic smoking material to generating smoke, a control box coupled with a thermocouple and a cooking tube, a motor configured to turn a screw auger, wherein said screw auger is configured to convey said smoking material and an ash collector; a water reduction subsystem comprising a plurality of internal chambers separated by baffles; a smoke storage chamber comprising an accordion bladder, a pump configured to evacuate air from said bladder; a gas odor reduction subsystem comprising a plurality of filter housings comprising filtering material configured to adsorb gas distasteful compounds, and a plurality of heaters configured to control water condensation, wherein at least one of said heaters is controlled by a thermostat located in said control box, a backpressure device coupled with a smoke pressure controller, wherein said backpressure device is configured to allow the flow of smoke when the pressure reaches 1 bar, and a blower configured to force high volumes of air or dry inert gases in the opposite direction of the flow of the smoke; a smoking chamber comprising a housing configured to received aerosol smoke from the gas odor reduction subsystem, wherein said aerosol smoke is substantially reduced of distasteful gas compounds, comprising internal racks to place food, an exhaust pipe configured to discharge smoke, a plurality of circulating fans, a thermostatic controller configured to control the temperature of smoke and food, a humidity control device, a pressure control device; and a plurality of valves configured to automatically and/or manually open and close during a smoking cycle, wherein the gas compounds having distasteful odors from said smoke aerosol are substantially reduced in the food after a smoking cycle.

According to an embodiment, the filtering material may comprise 6 millimeter beads of molecular sieves having a pore size of 0.7 nanometer (7 angstroms).

According to an embodiment, the filtering material may comprise 4 millimeter beads with a pore size of 0.6 nanometer (6 angstroms).

According to an embodiment, the filtering material may comprise 2.5 millimeter beads having a pore size of 0.5 nanometer (5 angstroms).

According to an embodiment, hot air may be forced into the smoking system through a valve to regenerate said filtering material.

According to an embodiment, there is provided a system for smoking food further comprising a distasteful gas compounds reduction subsystem comprising: a smoke receiving chamber, a filter housing comprising at least three filters having a first adsorbent material having 1 to 3 millimeter granules of microporous activated carbon, a second adsorbent configured in 1.2 millimeter beads of molecular sieves with a pore size 0.7 to 0.8 nanometer (7 to 8 angstroms), and a third adsorbent configured in 1.6 millimeter beads of molecular sieves with a pore size opening of 0.5 nanometer (5 angstroms); and a passage way configured to run through said filters, comprising a smoke intensity regulator, wherein the smoke intensity regulator comprises: a cap, a locking notch, a steel washer placed inside the cap, configured to control the dosage of aerosol smoke that by-passes the filters, a gasket comprising a pin configured to lock the notch, wherein the gas compounds having distasteful odors from said smoke aerosol are substantially reduced in the food after a smoking cycle.

According to an embodiment, there is provided a system for smoking food further comprising a liquid smoke system use for smoking food, wherein the perception of gas compounds having distasteful odors are further reduced in the food after a smoking cycle.

The disclosure describes a process for smoking food, the process comprising: heating an organic material to produce aerosol smoke having gas compounds with distasteful odors; reducing water from said smoke aerosol by condensing said aerosol smoke using a condensation method, wherein said condensed aerosol smoke passes through at least one microporous filter to reduce distasteful gas odors,; and exposing food to said aerosol smoke with reduced distasteful odors, wherein the food has a traditional smoke aroma and flavor with reduced distasteful gas odors.

The described process for smoking food of the disclosure further comprises: reducing traditional smoke flavor compounds; and supplementing traditional smoke flavor compounds.

The method of heating may comprise pyrolysis or thermolysis.

The method of heating may comprise any method that thermally decomposes an organic burning material, preferably in an oxygen restricted environment.

The smoke may be generated at various operable temperature provided that flavor compounds and toxins are controlled.

The smoke may be generated continuously so that the smoke flow discharging from the smoke generator is uninterrupted.

The smoke may be generated intermittently in batch quantities.

The smoke may be generated at various operable temperatures, including the optimal temperature range for heating sawdust from between 250° C to 500°.

The smoke may be generated at various operable temperatures from between 230°C to 600°C.

The smoke may be pure undiluted smoke made from hardwoods.

Hardwoods may be from a singular species such as Oak, or from citrus fruit trees such as Orange trees or Lemon trees or from Acacia trees.

The smoke may be made from other types of woods, provided that the characteristic smoke aroma and preservative values of the whole smoke are equally superior to hardwoods and that the smoke yields are equally higher in terms of flavor imparting aerosol smoke and recovery of smoke condensate as well.

The tar trap may be a chamber that receives smoke from the smoke generator and removes a substantial portion of tar from the aerosol smoke.

The pre-filter is a condensation filter.

The condensation method may be of any type, including but not limited to, baffling systems, plastic bags and temperature reducing devices known in the art.

The condensation method may be any means to reduce water, provided that it reduces the majority of the tar fraction or the water-insoluble phase containing PAHs and retains the remaining aerosol smoke.

The condensation method further configured to obtain the desired grade of smoke flavor in the smoked food, by recovering smoke flavoring in the form of liquid condensates and to remove harmful compounds. One skilled in the art would appreciate that decreasing water in the aerosol smoke increases efficiencies in the reduction of objectionable gas compound with bad gas odors. Further, increasing the level of condensation will decrease the characteristic smoke flavor agents in the aerosol stream, while increasing the quantity of liquid smoke distillates. Less condensation will produce higher water content in the aerosol smoke and stronger smoke flavor, with less liquid smoke condensates.

The desired grade of smoke flavor may be obtained by reducing the odor intensity of objectionable gas compounds that are more noticeable in a lightly smoked product.

In another embodiment, after the condensation step, the smoke passes through a temporary smoke storage chamber that regulates smoke flow to be a continuous flow through the subsequent distasteful gas compound reduction subsystem, wherein objectionable gas compounds and volatile organic compounds (VOCs) are substantially removed.

The gas compounds having distasteful odors, and which are referred to herein as "objectionable compounds" may be 1,3-Butadiene, propylene C₃H₆, propene, methyl ethylene, 1,3-Butadiene C₄H₆, ethylene, butane (i-Butane, n-butane), acetone, pentene (1-pentene), n-pentane, 2-Butanone (MEK), 2,2-dimethylbutane, chloromethane (Methyl Chloride), Benzene, t-2-Butene, and other hydrocarbon VOC's compounds present in aerosol smoke at ambient pressure and temperature.

The compounds that characterize by having a pleasant smoke flavoring compounds may include carboxylic acids, carbonylic, and phenolic compounds.

The gas compounds having distasteful odors and other hydrocarbon VOC's compounds may have lower molecular weight and smaller critical diameter than the compounds that characterize by having a pleasant smoke flavoring such as phenols.

In another embodiment, the objectionable compounds are substantially removed from the food. In particular, a person skilled in the art would understand that the instant invention provides for a significant reduction of objectionable gas odors and flavors found in smoked seafood and meat that may be caused by propylene C₃H₆, also known as propene or methyl ethylene, and 1,3-Butadiene C₄H₆ found in, but not limited to, hard wood aerosol smoke. The inventor found propylene C₃H₆ and 1,3-Butadiene C₄H₆ in unexpected high concentrations in hardwood smoke, ranging from more than 100 to 93,000 times their published odor thresholds. Said objectionable gas odors and flavors in wood smoke may impart petroleum-like smell, rubber-like smell, gasoline smell and irritating and unpleasant odors to smoked foods.

In another embodiment, microporous materials may be used to substantially remove unwanted gas odors from aerosol smoke.

The microporous materials may be molecule sieves made of a plurality of material comprising a uniform pore size and shape that adsorb and/or separate specific undesirable gas compounds.

The molecule sieves may have a plurality of pores configured to absorbed and/or separate gas compounds having a molecular size smaller than the pore size.

The molecule sieves may have a pore size between less than 0.4 nanometer (4 angstroms) and less than 2 nanometers (20 angstroms). Preferably, molecule sieves may have a pore size between 0.5 to 0.7 nanometer (5 to 7 angstroms).

The molecule sieves having a pore size of 0.5 nanometer (5 angstroms) for absorbing propylene and other hydrocarbon compounds with a critical diameter less than 0.5 nanometer (5 angstroms), wherein larger molecules such a phenols that have a larger molecular size are excluded.

The molecule sieves may comprise preferably hydrophobic filtering material favorable to nonpolar molecules. One skilled in the art would understand that the majority of objectionable gas compounds have low water solubility in comparison to phenols.

In a preferred embodiment, the unwanted gas odors from aerosol smoke are substantially removed by condensation and by using microporous materials. One skilled in the art would appreciate that water competes to occupy the pore sites in certain molecular sieves used for reduction of objectionable gas compounds. As such, reducing water in the aerosol smoke is influential to increase adsorption capacity of target unwanted hydrocarbons.

One skilled in the art would understand that molecular sieves are available in many forms including powder, beads, and cylindrical shapes. It should be noted that traditional smoke flavoring phenols (C6H5OH) are potent aromatic organic compounds having a very strong odor and low odor threshold values of 0.0045 - 1.95 PPM. Therefore, only a small amount of phenolic compounds need to survive the microporous subsystem to lightly smoke seafood and meat, especially if a continuous flow of smoke is applied. With undesirable gas odors reduced, a lightly smoked aroma and taste can be applied to seafood, with a refreshing feeling of lightness, sweetness, and pure aroma and taste of smoke that is superior to conventional smoked products in which gas compounds with distasteful odors are not reduced.

Activated carbon or activated charcoal having microporous width in size less than 2 nanometers (20 angstroms) may also be used to remove gas compounds with objectionable odors. One skilled in the art would appreciate that activated carbon in the form of mesoporous (width = 2 - 50 nanometers or 20 - 500 angstroms) and macro-porous (width > 50 nanometers or 500 angstroms) would lack in trapping propylene, but it can have pre-filter applications. The porosity of activated carbon may not be as uniform in size as molecular sieves. The variance in pore size results in a broader range of compounds being reduced that can include a higher volume of smoke flavoring compounds compared to molecular sieves. However, if the smoke flavoring compounds fall below desired levels, due to any type of objectionable gas odor reduction means, supplemental smoke flavoring can be reintroduced in a further step.

In another embodiment, microporous materials may be contacted by the aerosol smoke under pressure as to force the distasteful gases into the pores. One skilled in that art would understand that pressure will increase the load capacity of the molecular sieves for reduction of distasteful gas compounds that impart unpleasant odors and flavor to smoked seafood and meats.

In another embodiment, the apparatus for smoking foods comprising a backpressure valve that maintains a predetermined pressure inside the microporous subsystem.

In another embodiment, the apparatus for smoking foods operates continuously for enough time to complete a smoking cycle.

In another embodiment, the temperature of the distasteful gas reduction subsystem is held above the temperature of the smoke discharging from the condensing filter and temporary smoke storage chamber. One skilled in the art would appreciate that a correspondingly higher temperature can be applied if the adsorbent system is pressurized, to reduce condensation. One skilled in the art would appreciate that it is a general practice to decrease temperature to increase the efficiency of adsorption. However, according to the invention, increasing the temperature keeps water containing phenols in the gaseous phase during distasteful gas adsorption. If the temperature is allowed to decrease according to normal practice then the added forces of condensation will discharge additional water with dissolved smoke flavor compounds in the microporous subsystem, which may prematurely saturate the filters while reducing the smoke flavor compounds retained in the aerosol smoke or collected in the form of a liquid condensate.

In another embodiment, the pores in the molecular sieves may be regenerated by various methods, including hot air flushing in the preferred temperature range from 150°C to 315°C, depending on the adsorbent, and further means, including but not limited to the employment of vacuum. One skilled in the art would appreciate that Molecular sieves made of various materials are durable, resistant to heat, cleanable, and have a high crush strength, and shelf life lasting 15 to 20 years, for some gas separation systems. However, the shelf life will be much shorter for removal of distasteful gas compounds from aerosol smoke. Larger molecular size smoke flavoring compounds such as phenols cannot enter certain specified adsorbents. However, depending on the smoke constituents, tacky substances can adhere to external surfaces and contaminate the molecular sieve elements. Cleaning solvents such a caustic soda and cleaning equipment such as ultrasonic cleaners can be used for maintenance of the molecular sieve. Cleaning time tables will depend on composition of the smoke, type and quantity of molecular sieves in operation, and the volume of smoke to be filtered.

In another embodiment, the smoke with reduced distasteful gas compounds may be applied directly to seafood or meat or continue through further processes, and the temperature can be adjusted to accommodate ultra-cold, cold, or hot smoking. One skilled in the art would appreciate that the desired flavor profile can be adjusted by submental aerosol smoke or liquid smoke concentrates, hardwood types, quality and quantity of hardwood, burning temperatures, water reduction levels and amount of smoke applied to the food.

In another embodiment, the process for smoking food further provides a liquid distillate that can be processed into a liquid smoke flavoring and recycled to add characteristic smoke flavor to food.

The liquid smoke may be produced by pyrolysis of hardwood (not chemically treated) in a controlled oxygen environment with a temperature not exceeding 600 °C.

The liquid smoke may be produced by condensation or dry distillation.

The liquid smoke may be used as supplementary flavor and may be added to enhance a pleasant smoke flavor of food.

The liquid smoke condensates can be nebulized or otherwise vaporized for supplemental external exposure smoking or gas injection.

The liquid smoke may also contain favorable and preservative brines, including, but not limited to salt and sugar.

The brines may be added either by external exposure or injection, the latter being useful for thicker portions of meat and seafood, preferably prior to smoking of the food.

One skilled in that would understand that the full potential of the smoking process disclosed herein is obtained by utilization of all components of the smoking process, including the gases, vapors, liquid distillate containing particulates, tar, and char, that all have a market.

The liquid smoke condensates collected according to this invention can be processed by various methods generally known, for example U.S patent 5,637,339 to Moeller incorporated by reference and reapplied to the meat or seafood. Alternatively, the liquid condensates can be sold at market value. One skilled in the art would appreciate that an objective of the invention disclosed herein is to recover value from all the products produced, with emphasis on the high value smoke condensates that can be further used to flavor foods. It has been noted that in the output from pyrolysis of hardwood the weight ratio of products is +/- 50% liquid distillates, 30% char, and 20% aerosols. Furthermore, markets for tar exist for manufacturing of water proof ropes and also used for skin treatment and in veterinary medicine. Worldwide markets exist for biochar, used for soil enhancement.

In an embodiment, the exposure of food may be completed in a smoking chamber that is flooded by said aerosol smoke with reduced distasteful compounds.

In another embodiment, the exposure of food to said aerosol smoke with reduced distasteful compounds may be completed by injection.

The smoking chamber may comprise a refrigerated smoking enclosure.

In another embodiment, the exposure of food to said aerosol smoke with reduced distasteful compounds may be completed in any container configured at the desired smoking temperature.

The exposure of food to said aerosol smoke with reduced distasteful compounds may be completed for durations suitable to produce the desire result. For example, Ultra-cold smoking of meat or seafood is cured in the smoking environment at an optimal temperature of 0° C and a preferred temperature range of 0° C to 5° C for 12 to 48 hours. Cold smoking can occur at a temperature range of 20° to 30° C for 6 to 12 hours. Hot smoking meat or seafood can be achieved in the temperature range of 65-75° C until the desired internal temperature is reached. One skilled in the art would appreciate that times and temperature can be adjusted up or down as long as Good Manufacturing Practice's (GMP) are followed to ensure the smoked seafood and meats are safe for processing, storage, and consumption.

One skilled in the art would appreciate that after smoking is completed for the desired period of time, the smoked meat or seafood is removed from the smoking chamber and packaged according to the market demand. Depending on the salt content and water activity in the flesh the meat or seafood can be packaged and refrigerated for the raw market. Alternatively the products can be vacuum packed, frozen, and stored at conventional cold storage temperatures.

The following terms are defined below.

Unless otherwise specified, the following definitions apply:
The singular forms "a", "an" and "the" include corresponding plural references unless the context clearly dictates otherwise.

As used herein, the term "comprising" is intended to mean that the list of elements following the word "comprising" are required or mandatory but that other elements are optional and may or may not be present. As used in this specification and claim(s), the words "comprising" (and any form of comprising, such as "comprise" and "comprises"), "having" (and any form of having, such as "have" and "has"), "including" (and any form of including, such as "include" and "includes") or "containing" (and any form of containing, such as "contain" and "contains"), are inclusive or open-ended and do not exclude additional, unrecited elements or process steps.

As used herein, the term "consisting of' is intended to mean including and limited to whatever follows the phrase "consisting of". Thus, the phrase "consisting of" indicates that the listed elements are required or mandatory and that no other elements may be present.

It is noted that terms like "preferably", "commonly", and "typically" are not utilized herein to limit the scope of the claimed invention or to imply that certain features are critical, essential, or even important to the structure or function of the claimed invention. Rather, these terms are merely intended to highlight alternative or additional features that can or cannot be utilized in a particular embodiment of the present invention.

For the purposes of describing and defining the present invention it is noted that the term "substantially" is utilized herein to represent the inherent degree of uncertainty that can be attributed to any quantitative comparison, value, measurement, or other representation. The term "substantially" is also utilized herein to represent the degree by which a quantitative representation can vary from a stated reference without resulting in a change in the basic function of the subject matter at issue.

The term "about" is used to indicate that a value includes an inherent variation of error for the device or the method being employed to determine the value.

Features and advantages of the subject matter hereof will become more apparent in light of the following detailed description of selected embodiments, as illustrated in the accompanying figures. The drawings and the description are to be regarded as illustrative in nature, and not as restrictive and the full scope of the subject matter is set forth in the claims.

### BRIEF DESCRIPTION OF THE DRAWINGS

Further features and advantages of the present disclosure will become apparent from the following detailed description, taken in combination with the appended drawings, in which:
Fig. 1 shows a cutaway view of the smoke generator and water reduction subsystem.
Fig. 2 represents a cutaway diagram of the temporary smoke storage chamber, distasteful gas compound reduction subsystem, and a smoking chamber.
Fig. 3 illustrates an alternative distasteful gas compound reduction subsystem with smoke flavor regulator and liquid smoke enhancement provision.

### DETAILED DESCRIPTION

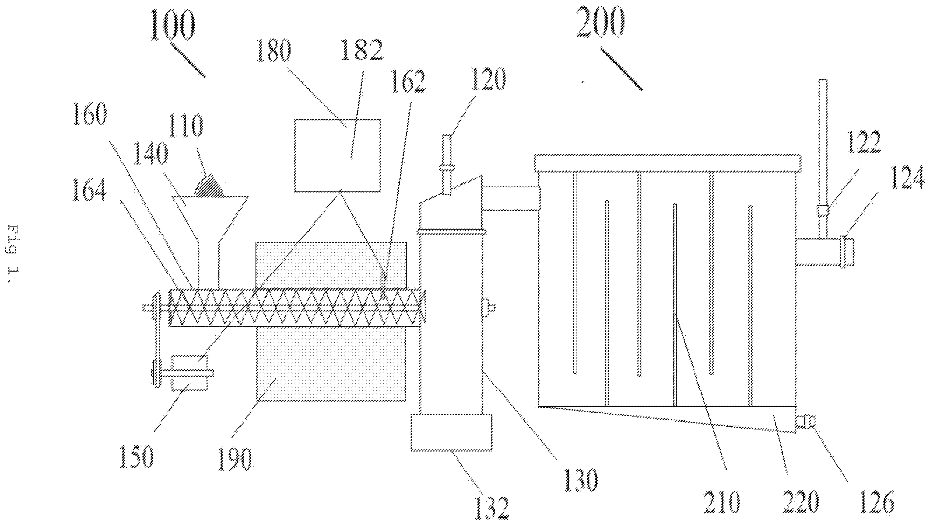

According to embodiments, and referring now to Fig. 1, there is provided a smoke generator (100) and cooking oven (190) that provides a heating source preferably electrical or gas. The cooking oven (190) is preheated to a predetermined temperature set in a control box (180), preferably between 250 and 600° C. The control box (180) communicates with the thermocouple (162) receiving the temperature inside the cooking tube (160). When the desired temperature inside the cooking tube (160) measured by the thermocouple (162) is reached, the motor (150) is activated which turns the screw auger (164). Sawdust or other organic smoking material (110) in the hopper (140) is conveyed by the screw auger (164) through the cooking tube (160) and cooking oven (190) discharging smoke inside an ash collector (130). The ash collector is sealed at the bottom with water (132) serving as a multi-function device to collect tar and ash and reduce smoke temperature.

According to an embodiment, the smoke generator (100) may comprise at least one valve (122, 124) that are closed as the smoke fills the ash collector purging out air through the pipe and open valve (120). When the ash collector is flooded with smoke the valve (120) closes and the valve (122) opens. Smoke fills the condensing filter (200) that acts as a water reduction means to cool and condense water from the aerosol smoke while the air inside flows out the pipe with open valve (122).

According to an embodiment, the water reduction subsystem in the present embodiment is a metal condensing filter (200) having approximately 75 centimeters wide and 120 centimeters high, comprising a plurality of internal chambers separated by baffles (210) and condensing surfaces. The condensing filter (200) can be either air cooled or water cooled to condense water from the aerosol smoke. Liquid smoke condensates accumulate at the bottom of the condensing filter (220) and are collected through the pipe with valve (126).

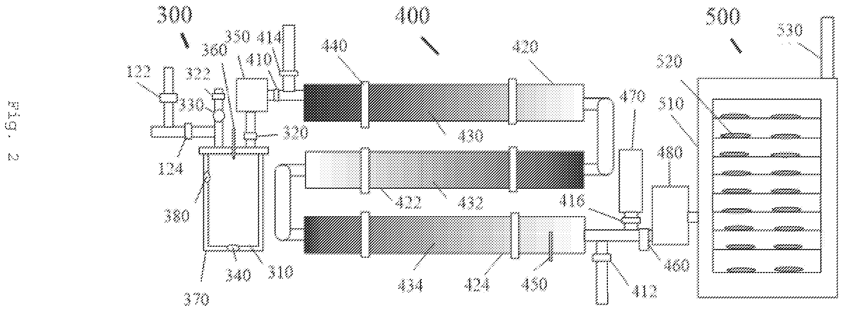

Referring now to Fig. 2, according to an embodiment, there is provided a temporary smoke storage chamber (300) is constructed of an outer housing (370) that is scaled in size to output volume of the smoke generator (100). In an embodiment the housing (370) is fabricated from the equivalent of a 209 liters steel drum. The temporary smoke storage chamber (300) comprises a collapsible accordion bladder (310) that is positioned inside outer housing (370) and at least two valves (320, 322). Preparation of the temporary smoke storage chamber (300) for a smoking cycle begins with valve (124) from the condensing filter (200), and valve (320) being closed, while valve (322) is opened. This enables pump (330) to evacuate air from the bladder (310). When the inner bladder (310) is shrunken valve (322) closes. In the starting position the inner bladder (310) is collapsed.

According to an embodiment, when the condensing filter (200) is flooded with smoke and the temporary smoke storage chamber (300) is in the starting position valve (122) closes. Then valve (124) opens to allow smoke to naturally flow from the condensing filter to the reduced pressure temporary smoke storage chamber (300) with its inner bladder (310) expanding.

According to an embodiment, the temporary smoke storage chamber (300) can be comprised of any means that regulates or synchronizes the output of the smoke generator and input to a gas odor reduction subsystem (400).

According to an embodiment, when the accordion bladder (310) is substantially filled with smoke, sensor (340) opens valves (320, 410, 412), and closes valves (414, 416). When pump (350) is activated it pushes smoke through subsystem (400) purging the air out valve (412) into the atmosphere. When the smoke is evacuated from the temporary smoke storage chamber (300) and the accordion bladder (310) is collapsed, the sensor (380) turns off the pump (350). When subsystem (400) is substantially flooded with smoke the valve (412) closes.

According to an embodiment, the subsystem (400) is comprised of filtering material that reduces distasteful gas compounds that will contribute objectionable foul odors, unappetizing, or unsavory flavors to smoked seafood and meats, especially noticeable in lightly cold smoked seafood.

According to an embodiment, microporous adsorbents are applied, preferably, hydrophobic molecular sieves that give priority to adsorption of risk odor gas compounds and exclude water containing phenols. In an embodiment the subsystem (400) comprises at least three filter housings (420, 422, 424) comprising a filter (430, 432, 434), each housing having at least 15 centimeter in inner diameter and 180 centimeters long. Each one of the three filter housings (420, 422, 424) comprises a different type of adsorbent.

In an embodiment, a first filter (430) is packed with 6 millimeter beads of molecular sieves having a pore size of 0.7 nanometer (7 angstroms).

In an embodiment, a second filter (432) is loaded with 4 millimeter beads with a pore size of 0.6 nanometer (6 angstroms).

In an embodiment, a third filter (434) is 2.5 millimeter beads having a pore size of 0.5 nanometer (5 angstroms).

According to an embodiment, the reduced distasteful gas compound subsystem (400) is further equipped with an optional heater (440), thermostatic probe (450), and optional backpressure device (460) at the discharge port of the subsystem (400).

According to an embodiment, the temporary smoke storage chamber (300) has a thermocouple (360), configured to transmit the temperature to the control box (180). The control box (180) receiving the temperature from the thermocouple (360) and either manually or automatically sets the thermostatic controller for the heater (440) to be 1° C to 4° C higher than the smoke temperature from the thermocouple (360). The heater (440) is activated and controlled by a thermostat (182) located in the control box (180) to maintain the desired internal temperature of the subsystem (400).

According to an embodiment, the backpressure device (460) is optionally set to maintain a consistent backpressure inside the subsystem (400) and also acts as a closed valve for regeneration of molecular sieves using the air blower (470). In an embodiment the backpressure at the backpressure device (460) is set to 1 bar. Any pressure can be used, depending on the desired outcome. If the pressure is increased then water condensation in the subsystem (400) may increase as well. However, water condensation can be controlled by increasing the internal temperature through the heaters (440).

According to an embodiment, when pressure in subsystem (400) exceeds 1 bar smoke will flow out of the backpressure device into a smoke temperature controller (480) that regulates the smoke to its desired temperature for smoking food.

According to an embodiment, the smoke temperature can be adjusted by cooling or heating provisions applied to the smoking chamber (500). The aerosol smoke with reduced distasteful gas odors can now be used to smoke seafood and meat by flooding a smoking chamber (500), while needle injection can be supplemental applied to thicker cuts of food.

According to an embodiment, the smoking chamber (500) comprises an insulated housing (510) that receives aerosol smoke from the temperature controller (480), which is circulated around the food on racks (520). The smoke discharges through the exhaust pipe (530). The smoking chamber can be further equipped with circulation fans, thermostatic controllers, food temperature and/ or humidity control devices, pressure features, as desired. Any type of smoking receptacle or temperature control means can be used.

According to an embodiment, the adsorbent materials of filters (430, 432, 434) are regenerated by heat to remove distasteful gas compounds. After smoking operations are finished valve (410) closes and (460) acts as a closed valve, while valves (414) and (416) open for regeneration of filtering material.

According to an embodiment, the internal temperature of the subsystem (400) is raised by the optional heaters (440) to a temperature of 150° C. High volumes of air or dry inert gas such as nitrogen is forced by the blower (470) in the reverse direction of smoke flow through the subsystem (400). The hot air exits through valve (414) into the atmosphere. The internal temperature established by the probe (450) and control box (180) is gradually increased from 150° C to as high as 315° C, depending on the adsorbent type of material.

According to an embodiment, in the absence of the optional heater (440) hot air or hot dry gas can be heated to 150° to 315° C and forced into the pipe through valve (416) and out of the pipe with valve (414). Hot air flow continues until regeneration of the filtering material is complete, at which time valves (414) and (416) close.

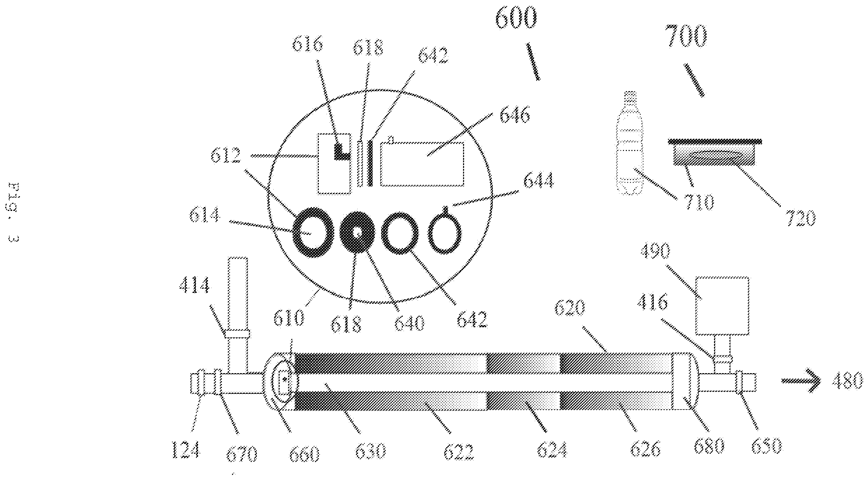

According to an embodiment, and now referring to Fig. 3, an alternative distasteful gas compound reduction subsystem (600) is shown with and optional smoke intensity regulator (610) that controls the amount of traditional smoke aroma and flavors applied to seafood or meat.

According to an embodiment, the gas compounds reduction subsystem (600) comprises a filter housing (620) configured in the form of a cylinder with an inside diameter of approximately 25 centimeters and 200 centimeters long. The filter housing (620) comprises at least three types of adsorbents; a first adsorbent having 1 to 3 millimeter granules of microporous activated carbon (622); a second adsorbent configured in 1.2 millimeter beads of molecular sieves with a pore size 0.7 to 0.8 nanometer (7 to 8 angstroms) (624); and a third adsorbent configured in 1.6 millimeter beads of molecular sieves with a pore size opening of 0.5 nanometer (5 angstroms) (626).

According to an embodiment, the gas compounds reduction subsystem (600) comprises a passage way (630) constructed of a hollow stainless steel tube with an inside diameter approximately 5 centimeter and a length that runs through the center of the adsorbents (622, 624, 626) from one end and out of the other. The hollow passage way (630) is coupled with the smoke intensity regulator (610) transports a minority percentage of smoke from the condensing filter, bypassing the adsorbent filters, and increasing the traditional smoke flavor intensity.

According to an embodiment, the smoke intensity regulator (610) is attached to the entryway of the hollow passage way (630) and comprises of a cap (612) with a 4 cm hole (614) and a locking notch (616). Nested inside the cap (612) there is a stainless steel washer (618) with a 2 centimeter hole (640) providing an orifice that controls a precise dosage of aerosol smoke bypassing the adsorbent filters (622, 624, 626). An O-ring or gasket (642) seals the assembly comprises a pin (644) on the outside tube entryway (646) locking the assembly in the notch (616) of the cap (612).

According to an embodiment, the size, type and quantities of filter material (622, 624, 626) can be adjusted. At least one microporous material may be used to substantially reduce distasteful gas compounds from the smoke. The orifice (640) is sized to control a measured volume of smoke from the condensing filter (200) circumventing the adsorbents. The diameter of the hollow passage way (630) and orifice (640) can be configured to be larger, smaller, or completely closed in which case all smoke will flow through the filtering material (622, 624, 626).

According to an embodiment, valves (414) and (416) are closed, and valves (124) and (650) are open. Smoke with reduced water flows from the condensing filter (200) through valve (124) and into a smoke receiving chamber (660) of the subsystem (600). A fan (670) can be applied to motivate the smoke while maintaining a positive pressure inside the subsystem (600).

According to an embodiment, the smoke flow is forked into two streams. A majority of the smoke streams from the receiving chamber (660) through the through the filtering material (622, 624, 626). A minority of about 10% of smoke metered by the orifice (640) streams through the tube (630) bypassing the filtering material (622, 624, 626). The two streams of smoke join into one stream in the smoke discharge chamber (680).

According to an embodiment, subsystem (600) can operate with or without the temporary storage chamber (300), optional heater (440), and backpressure device (460).

According to an embodiment, the aerosol smoke with reduced objectionable gas compounds located in the smoke discharge chamber (680) is now ready for temperature adjustment and smoking seafood and meat. With the distasteful gas compounds substantially reduced, preservative components of the aerosol smoke retained, a finished product can be produced having the pure essence, aroma, and flavor of lightly smoked seafood that will be superior to other smoked products.

According to an embodiment, after the smoking cycle is completed, valves (124) and (650) close and valves (414) and (416) open optionally for regeneration of filtering materials (622, 624, 626).

According to an embodiment, the subsystem (600) comprises a blower (690) that supplies hot air or hot dry gas starting at 150° C entering valve (416) and discharging through valve (414) of subsystem. One skilled in the art would appreciate that the hollow passage way (630) may run through the center of the adsorbents (622, 624, 626) serving a secondary function of expediting regeneration by providing heat to the core of the filtering material. Temperature is increased gradually to the regeneration specifications of the molecular sieve with care to avoid combustion, fire, or other safety hazards.

According to an embodiment, the present invention comprises liquid smoke system (700). Liquid smoke (710) made according to the present invention or purchased from the liquid smoke flavoring market (710) can be prepared with or without other marinade such as salt and/or sugar. Liquid smoke can be applied to meat or seafood in a solution by spray, dipping (480), liquid or vaporized gas injection.

## Claims

1. A process for smoking food comprising:
a) heating an organic material to produce aerosol smoke having preservative components and distasteful gas compounds, the distasteful gas compounds being volatile organic compounds (VOCs),
the process for smoking food being **characterized in that** it comprises:
b) prefiltering the aerosol smoke to reduce water while retaining preservative components in said aerosol smoke, wherein the prefiltering is done by condensation thereby producing condensed aerosol smoke;
c) reducing distasteful gas compounds by passing the condensed aerosol smoke through a gas odor reduction subsystem (400) having microporous filtering adsorbents, thereby producing a filtered condensed aerosol smoke having reduced distasteful gas compounds while retaining the preservative components; and
d) exposing food to said filtered condensed aerosol smoke, thereby producing smoked food with reduced distasteful gas compounds.

2. The process according to claim 1, wherein the organic material is hardwood used for smoke flavoring food.

3. The process according to claim 1, wherein the gas odor reduction subsystem (400) comprises:
- a first filter housing (420) comprising a first filter (430), wherein the first filter (430) comprises 6 millimeter beads of molecular sieves having a pore size of 0.7 nanometer (7 angstroms);
- a second filter housing (422) comprising a second filter (432), wherein the second filter (432) comprises 4 millimeter beads with a pore size of 0.6 nanometer (6 angstroms); and
- a third filter housing (424) comprising a third filter (434), wherein the third filter (434) comprises 2.5 millimeter beads having a pore size of 0.5 nanometer (5 angstroms).

4. The process according to claim 1, comprising adding supplemental smoke flavor compounds to said aerosol smoke.

5. The process according to claim 1, comprising adding supplemental smoke flavor compounds to said food.

6. A system for smoking food comprising a water reduction subsystem (200) and a gas odor reduction subsystem (400) to control water condensation and adsorb distasteful gas compounds, which are volatile organic compounds (VOCs), the system for smoking food being **characterized in that** the gas odor reduction subsystem (400) comprises microporous filtering adsorbents to produce a smoke flavored food with reduced distasteful gas compounds.

7. The system according to claim 6, **characterized in that** the gas odor reduction subsystem (400) comprises at least three filter housings (420, 422, 424), each filter housing comprising a filter (430, 432, 434), each filter housing (420, 422, 424) comprising a different type of adsorbent.

8. The system according to claim 6, **characterized in that** the gas odor reduction subsystem (400) comprises a first filter housing (420) comprising a first filter (430), a second filter housing (422) comprising a second filter (432) and a third filter housing (424) comprising a third filter (434).

9. The system according to claim 8, **characterized in that** the first filter (430) comprises 6 millimeter beads of molecular sieves having a pore size of 0.7 nanometer (7 angstroms).

10. The system according to claim 8, **characterized in that** the second filter (432) comprises 4 millimeter beads with a pore size of 0.6 nanometer (6 angstroms).

11. The system according to claim 8, **characterized in that** the third filter (434) comprises 2.5 millimeter beads having a pore size of 0.5 nanometer (5 angstroms).

12. The system according to any one of claims 6 or 7, further comprising:
a) a smoke generator (100) comprising:
i) a hopper (140) to feed organic smoking material,
ii) a cooking oven (190) configured for heating organic smoking material to generate smoke,
iii) a control box (180) coupled to a thermocouple (162) and a cooking tube (160),
iv) a motor (150) configured to turn a screw auger (164), wherein said screw auger (164) is configured to convey said hopper (140), and
v) an ash collector (130);
b) the water reduction subsystem (200) coupled to the smoke generator, comprising a plurality of internal chambers separated by baffles (210);
c) a smoke storage chamber (300) coupled to said water reduction subsystem (200) comprising:
i) an accordion bladder (310), and
ii)a pump (330) configured to evacuate air from said accordion bladder (310);
d) the gas odor reduction subsystem (400) coupled to said water reduction subsystem (200) further comprising:
i) a plurality of filter housings (420, 422, 424) comprising filtering material configured to adsorb the distasteful gas compounds
ii) a plurality of heaters (440) configured to control water condensation, wherein at least one of said heaters (440) is controlled by a thermostat (450) located in said control box (180),
iii) a backpressure device (460) coupled with a smoke pressure controller, wherein said backpressure device is configured to allow the flow of smoke when the pressure reaches 1 bar, and
iv) a blower (470) configured to force high volumes of air or dry inert gases in the opposite direction of the flow of the smoke;
e) a smoking chamber (500) coupled to the gas odor reduction subsystem (400) comprising:
i) a housing (510) configured to receive aerosol smoke from the gas odor reduction subsystem (400), comprising internal racks to place food,
ii) an exhaust pipe (530) configured to discharge smoke,
iii) a plurality of circulating fans,
iv) a thermostatic controller configured to control the temperature of food,
v) a humidity control device,
vi) a pressure control device; and
f) a plurality of valves configured to automatically and/or manually open and close during a smoking cycle.

13. The system according to any one of claims 6 to 12, wherein hot air is forced into the smoking system through a valve (414, 416) to regenerate said filtering material.

14. The system according to any one of claims 6 to 13, further comprising a distasteful gas compounds reduction subsystem (600) comprising:
a) a smoke receiving chamber (660),
b) a filter housing (620) coupled to the smoke receiving chamber (660) comprising at least three filters and having a first adsorbent material (622) having 1 to 3 millimeter granules of microporous activated carbon, a second adsorbent (624) configured in 1.2 millimeter beads of molecular sieves with a pore size 0.7 to 0.8 nanometer (7 to 8 angstroms), and a third adsorbent (626) configured in 1.6 millimeter beads of molecular sieves with a pore size opening of 0.5 nanometer (5 angstroms); and
c) a passage way (630) configured to run through said filters, comprising a smoke intensity regulator (610), wherein the smoke intensity regulator comprises:
i) a cap (612),
ii) a locking notch (616),
iii) a steel washer (618) placed inside the cap, configured to control the dosage of aerosol smoke that by-passes the filters, and
iv) a gasket (642) comprising a pin (644) configured to lock the notch.

15. The system according to any one of claims 6 to 14, further comprising a liquid smoke system (700) used for smoking food.

## Patentansprüche

1. Verfahren zum Räuchern von Lebensmitteln, umfassend:
a) Erhitzen eines organischen Materials zum Erzeugen eines Aerosolrauchs mit Konservierungskomponenten und geschmacklich unangenehmen Gasverbindungen, wobei die geschmacklich unangenehmen Gasverbindungen flüchtige organische Verbindungen (VOC) sind,
wobei das Verfahren zum Räuchern von Lebensmitteln **dadurch gekennzeichnet ist, dass** es Folgendes umfasst:
b) Vorfiltern des Aerosolrauchs, um Wasser zu reduzieren, während Konservierungskomponenten in dem Aerosolrauch zurückgehalten werden, wobei das Vorfiltern durch Kondensation erfolgt, wodurch kondensierter Aerosolrauch erzeugt wird;
c) Reduzieren geschmacklich unangenehmer Gasverbindungen durch Leiten des kondensierten Aerosolrauchs durch ein Teilsystem zur Reduzierung von Gasgeruch (400) mit mikroporösen Filteradsorbentien, wodurch ein gefilterter kondensierter Aerosolrauch mit reduzierten geschmacklich unangenehmen Gasverbindungen erzeugt wird, während die Konservierungskomponenten beibehalten werden; und
d) Inkontaktbringen von Lebensmitteln mit dem gefilterten, kondensierten Aerosolrauch, wodurch geräucherte Lebensmittel mit reduzierten geschmacklich unangenehmen Gasverbindungen hergestellt werden.

2. Verfahren nach Anspruch 1, wobei das organische Material Hartholz ist, das zur Raucharomatisierung von Lebensmitteln verwendet wird.

3. Verfahren nach Anspruch 1, wobei das Teilsystem zur Reduzierung von Gasgeruch (400) umfasst:
- ein erstes Filtergehäuse (420), das einen ersten Filter (430) umfasst, wobei der erste Filter (430) 6-Millimeter-Kügelchen aus Molekularsieben mit einer Porengröße von 0,7 Nanometern (7 Angström) umfasst;
- ein zweites Filtergehäuse (422), das einen zweiten Filter (432) umfasst, wobei der zweite Filter (432) 4-Millimeter-Kügelchen mit einer Porengröße von 0,6 Nanometern (6 Angström) umfasst; und
- ein drittes Filtergehäuse (424), das einen dritten Filter (434) umfasst, wobei der dritte Filter (434) 2,5-Millimeter-Kügelchen mit einer Porengröße von 0,5 Nanometern (5 Angström) umfasst.

4. Verfahren nach Anspruch 1, umfassend das Zugeben von zusätzlichen Raucharomaverbindungen zu dem Aerosolrauch.

5. Verfahren nach Anspruch 1, umfassend die Zugabe von zusätzlichen Raucharomaverbindungen zu dem Lebensmittel.

6. System zum Räuchern von Lebensmitteln, umfassend ein Teilsystem zur Reduzierung von Wasser (200) und ein Teilsystem zur Reduzierung von Gasgeruch (400), um die Wasserkondensation zu steuern und geschmacklich unangenehme Gasverbindungen, die flüchtige organische Verbindungen (VOC) sind, zu adsorbieren, wobei das System zum Räuchern von Lebensmitteln **dadurch gekennzeichnet ist, dass** das Teilsystem zur Reduzierung von Gasgeruch (400) mikroporöse Filteradsorbentien umfasst, um ein mit Rauch aromatisiertes Lebensmittel mit reduzierten geschmacklich unangenehmen Gasverbindungen zu erzeugen.

7. System nach Anspruch 6, **dadurch gekennzeichnet, dass** das Teilsystem zur Reduzierung von Gasgeruch (400) mindestens drei Filtergehäuse (420, 422, 424) umfasst, wobei jedes Filtergehäuse einen Filter (430, 432, 434) und jedes Filtergehäuse (420, 422, 424) eine andere Art von Adsorptionsmittel umfasst.

8. System nach Anspruch 6, **dadurch gekennzeichnet, dass** das Teilsystem zur Reduzierung von Gasgeruch (400) ein erstes Filtergehäuse (420), umfassend einen ersten Filter (430), ein zweites Filtergehäuse (422), umfassend einen zweiten Filter (432), und ein drittes Filtergehäuse (424), umfassend einen dritten Filter (434), umfasst.

9. System nach Anspruch 8, **dadurch gekennzeichnet, dass** der erste Filter (430) 6-Millimeter-Kügelchen aus Molekularsieben mit einer Porengröße von 0,7 Nanometern (7 Angström) umfasst.

10. System nach Anspruch 8, **dadurch gekennzeichnet, dass** der zweite Filter (432) 4-Millimeter-Kügelchen mit einer Porengröße von 0,6 Nanometern (6 Angström) umfasst.

11. System nach Anspruch 8, **dadurch gekennzeichnet, dass** der dritte Filter (434) 2,5-Millimeter-Kügelchen mit einer Porengröße von 0,5 Nanometern (5 Angström) umfasst.

12. System nach einem der Ansprüche 6 oder 7, ferner umfassend:
a) einen Rauchgenerator (100), umfassend:
i) einen Trichter (140) zum Zuführen von organischem Rauchmaterial,
ii) einen Heizofen (190), der zum Erwärmen von organischem Rauchmaterial konfiguriert ist, um Rauch zu erzeugen,
iii) eine Steuereinheit (180), der mit einem Thermoelement (162) und einem Rauchrohr (160) gekoppelt ist,
iv) einen Motor (150), der zum Drehen einer Förderschnecke (164) konfiguriert ist, wobei die Förderschnecke (164) so konfiguriert ist, dass sie den Trichter (140) trägt, und
v) einen Aschesammler (130);
b) das Teilsystem zur Reduzierung von Wasser (200), das an den Rauchgenerator gekoppelt ist und eine Vielzahl von Innenkammern umfasst, die durch Ablenkplatten (210) getrennt sind;
c) eine an das Teilsystem zur Reduzierung von Wasser (200) gekoppelte Rauchspeicherkammer (300), umfassend:
i) eine Akkordeon-Blase (310) und
ii) eine Pumpe (330), die so konfiguriert ist, dass sie Luft aus der Akkordeon-Blase (310) absaugt;
d) das Teilsystem zur Reduzierung von Gasgeruch (400), das an das Teilsystem zur Reduzierung von Wasser (200) gekoppelt ist, ferner umfassend:
i) eine Vielzahl von Filtergehäusen (420, 422, 424), die Filtermaterial umfassen, das so konfiguriert ist, dass es die geschmacklich unangenehmen Gasverbindungen adsorbiert,
ii) eine Vielzahl von Heizgeräten (440), die so konfiguriert sind, dass sie die Wasserkondensation steuern, wobei mindestens eines der Heizgeräte (440) durch einen Thermostat (450) gesteuert wird, der sich in dem Steuereinheit (180) befindet,
iii) eine Gegendruckvorrichtung (460), die mit einem Rauchdruckregler gekoppelt ist, wobei die Gegendruckvorrichtung so konfiguriert ist, dass sie den Rauchfluss zulässt, wenn der Druck 1 bar erreicht, und
iv) ein Gebläse (470), das so konfiguriert ist, dass es hohe Luftmengen oder trockene Inertgase in die entgegengesetzte Richtung des Rauchstroms zwingt;
e) eine Rauchkammer (500), die an das Teilsystem zur Reduzierung von Gasgeruch (400) gekoppelt ist, umfassend:
i) ein Gehäuse (510), das so konfiguriert ist, dass es Aerosolrauch von dem Teilsystem zur Reduzierung von Gasgeruch (400) aufnimmt, das interne Racks zum Platzieren von Lebensmitteln umfasst,
ii) ein Abgasrohr (530), das zum Ablassen von Rauch konfiguriert ist,
iii) eine Vielzahl von Umluftgebläsen,
iv) eine Thermostatsteuerung, die so konfiguriert ist, dass sie die Temperatur von Lebensmitteln steuert,
v) einen Feuchtigkeitsregler,
vi) eine Drucksteuervorrichtung; und
f) eine Vielzahl von Ventilen, die so konfiguriert sind, dass sie sich während eines Rauchzyklus automatisch und/oder manuell öffnen und schließen.

13. System nach einem der Ansprüche 6 bis 12, wobei heiße Luft durch ein Ventil (414, 416) in das Rauchsystem gedrückt wird, um das Filtermaterial zu regenerieren.

14. Verfahren nach einem der Ansprüche 6 bis 13, ferner umfassend ein Teilsystem (600) zur Reduzierung geschmacklich unangenehmer Gasverbindungen, umfassend:
a) eine Rauchaufnahmekammer (660),
b) ein Filtergehäuse (620), das an die Rauchaufnahmekammer (660) gekoppelt ist, umfassend mindestens drei Filter und ein erstes Adsorptionsmaterial (622) mit 1 bis 3 Millimeter Körnchen mikroporöser Aktivkohle, ein zweites Adsorptionsmittel (624), das in 1,2 Millimeter-Kügelchen von Molekularsieben mit einer Porengröße von 0,7 bis 0,8 Nanometern (7 bis 8 Angström) konfiguriert ist, und ein drittes Adsorptionsmittel (626), das in 1,6 Millimeter-Kügelchen von Molekularsieben mit einer Porengrößenöffnung von 0,5 Nanometern (5 Angström) konfiguriert ist; und
c) einen Durchgang (630), der so konfiguriert ist, dass er durch die Filter verläuft, umfassend einen Rauchintensitätsregler (610), wobei der Rauchintensitätsregler Folgendes umfasst:
i) eine Kappe (612),
ii) eine Arretierungsnut (616),
iii) eine im Inneren der Kappe angeordnete Stahlscheibe (618), die so konfiguriert ist, dass sie die Dosierung von Aerosolrauch steuert, der die Filter umgeht, und
iv) eine Dichtung (642), die einen Stift (644) umfasst, der so konfiguriert ist, dass er die Nut verriegelt.

15. System nach einem der Ansprüche 6 bis 14, ferner umfassend ein Flüssigrauchsystem (700), das zum Räuchern von Lebensmitteln verwendet wird.

## Revendications

1. Un procédé pour fumer des aliments comprenant :
a) réchauffer une matière organique pour produire une fumée d'aérosol ayant des composants conservateurs et des composés gazeux désagréables, les composés gazeux désagréables étant des composés organiques volatils (COV),
le procédé pour fumer des aliments étant **caractérisé en ce qu'**il comprend :
b) préfiltrer la fumée d'aérosol pour réduire l'eau tout en conservant les composants conservateurs dans ladite fumée d'aérosol, dans lequel le préfiltrage est effectué par condensation, produisant ainsi une fumée d'aérosol condensée ;
c) réduire les composés gazeux désagréables en faisant passer la fumée d'aérosol condensée à travers un sous-système de réduction des odeurs de gaz (400) ayant des adsorbants filtrants microporeux, produisant ainsi une fumée d'aérosol condensée filtrée ayant des composés gazeux désagréables réduits tout en conservant les composants conservateurs ; et
d) exposer les aliments à ladite fumée d'aérosol condensée filtrée, produisant ainsi des aliments fumés avec des composés gazeux désagréables réduits.

2. Le procédé selon la revendication 1, dans lequel la matière organique est du bois dur utilisé pour aromatiser à la fumée les aliments.

3. Le procédé selon la revendication 1, dans lequel le sous-système de réduction des odeurs de gaz (400) comprend :
- un premier boîtier de filtre (420) comprenant un premier filtre (430), dans lequel le premier filtre (430) comprend des billes de 6 millimètres de tamis moléculaires ayant une taille de pore de 0,7 nanomètre (7 angströms) ;
- un deuxième boîtier de filtre (422) comprenant un deuxième filtre (432), dans lequel le deuxième filtre (432) comprend des billes de 4 millimètres ayant une taille de pore de 0,6 nanomètre (6 angströms) ; et
- un troisième boîtier de filtre (424) comprenant un troisième filtre (434), dans lequel le troisième filtre (434) comprends des billes de 2,5 millimètres ayant une taille de pore de 0,5 nanomètre (5 angströms).

4. Le procédé selon la revendication 1, comprenant l'ajout de composés d'arôme de fumée supplémentaires à ladite fumée d'aérosol.

5. Le procédé selon la revendication 1, comprenant l'ajout de composés d'arôme de fumée supplémentaires auxdits aliments.

6. Un système pour fumer des aliments comprenant un sous-système de réduction de l'eau (200) et un sous-système de réduction des odeurs de gaz (400) pour contrôler la condensation de l'eau et adsorber les composés gazeux désagréables, qui sont des composés organiques volatils (COV), le système pour fumer des aliments étant **caractérisé en ce que** le sous-système de réduction des odeurs de gaz (400) comprend des adsorbants filtrants microporeux pour produire un aliment aromatisé à la fumée avec des composés gazeux désagréables réduits.

7. Le système selon la revendication 6, **caractérisé en ce que** le sous-système de réduction des odeurs de gaz (400) comprend au moins trois boîtiers de filtre (420, 422, 424), chaque boîtier de filtre comprenant un filtre (430, 432, 434), chaque boîtier de filtre (420, 422, 424) comprenant un type différent d'adsorbant.

8. Le système selon la revendication 6, **caractérisé en ce que** le sous-système de réduction des odeurs de gaz (400) comprend un premier boîtier de filtre (420) comprenant un premier filtre (430), un deuxième boîtier de filtre (422) comprenant un deuxième filtre (432) et un troisième boîtier de filtre (424) comprenant un troisième filtre (434).

9. Le système selon la revendication 8, **caractérisé en ce que** le premier filtre (430) comprend des billes de 6 millimètres de tamis moléculaires ayant une taille de pore de 0,7 nanomètre (7 angströms).

10. Le système selon la revendication 8, **caractérisé en ce que** le deuxième filtre (432) comprend des billes de 4 millimètres ayant une taille de pore de 0,6 nanomètre (6 angströms).

11. Le système selon la revendication 8, **caractérisé en ce que** le troisième filtre (434) comprend des billes de 2,5 millimètres ayant une taille de pore de 0,5 nanomètre (5 angströms).

12. Le système selon l'une quelconque des revendications 6 ou 7, comprenant en outre :
a) un générateur de fumée (100) comprenant :
i) une trémie (140) pour alimenter les matières à fumer organiques,
ii) un four de cuisson (190) configuré pour chauffer les matières à fumer organiques afin de générer de la fumée,
iii) un boîtier de commande (180) couplé à un thermocouple (162) et un tube de cuisson (160),
iv) un moteur (150) configuré pour faire tourner une vis sans fin (164), dans lequel ladite vis sans fin (164) est configurée pour transporter ladite trémie (140), et
v) un collecteur de cendres (130) ;
b) le sous-système de réduction de l'eau (200) couplé au générateur de fumée, comprenant une pluralité de chambres internes séparées par des déflecteurs (210) ;
c) une chambre de stockage de fumée (300) couplée audit sous-système de réduction de l'eau (200) comprenant :
i) une vessie en accordéon (310), et
ii) une pompe (330) configurée pour évacuer l'air de ladite vessie en accordéon (310) ;
d) le sous-système de réduction des odeurs de gaz (400) couplé audit sous-système de réduction de l'eau (200) comprenant en outre :
i) une pluralité de boîtiers de filtre (420, 422, 424) comprenant un matériau filtrant configuré pour adsorber les composés gazeux désagréables,
ii) une pluralité d'éléments chauffants (440) configurés pour contrôler la condensation de l'eau, dans lequel au moins l'un desdits éléments chauffants (440) est contrôlé par un thermostat (450) situé dans ledit boîtier de commande (180),
iii) un dispositif de contre-pression (460) couplé à un contrôleur de pression de fumée, dans lequel ledit dispositif de contre-pression est configuré pour permettre l'écoulement de fumée lorsque la pression atteint 1 bar, et
iv) une soufflante (470) configurée pour forcer de grands volumes d'air ou de gaz inertes secs dans la direction opposée de l'écoulement de la fumée ;
e) une chambre à fumer (500) couplée au sous-système de réduction des odeurs de gaz (400) comprenant :
i) un boîtier (510) configuré pour recevoir la fumée d'aérosol du sous-système de réduction des odeurs de gaz (400), comprenant des racks internes pour placer les aliments,
ii) un tuyau d'échappement (530) configuré pour évacuer la fumée,
iii) une pluralité de ventilateurs de circulation,
iv) un contrôleur thermostatique configuré pour contrôler la température des aliments,
v) un dispositif de contrôle de l'humidité,
vi) un dispositif de contrôle de la pression ; et
f) une pluralité de vannes configurées pour s'ouvrir et se fermer automatiquement et/ou manuellement pendant un cycle de fumage.

13. Le système selon l'une quelconque des revendications 6 à 12, dans lequel l'air chaud est forcé dans le système de fumage à travers une vanne (414, 416) pour régénérer ledit matériau filtrant.

14. Le système selon l'une quelconque des revendications 6 à 13, comprenant en outre un sous-système de réduction des composés gazeux désagréables (600) comprenant :
a) une chambre de réception de fumée (660),
b) un boîtier de filtre (620) couplé à la chambre de réception de fumée (660) comprenant au moins trois filtres et ayant un premier matériau adsorbant (622) ayant des granules de 1 à 3 millimètres de charbon actif microporeux, un deuxième adsorbant (624) configuré en billes de 1,2 millimètre de tamis moléculaires ayant une taille de pore de 0,7 à 0,8 nanomètre (7 à 8 angströms), et un troisième adsorbant (626) configuré en billes de 1,6 millimètre de tamis moléculaires ayant une ouverture de taille de pore de 0,5 nanomètre (5 angströms) ; et
c) une voie de passage (630) configurée pour traverser lesdits filtres, comprenant un régulateur d'intensité de fumée (610), dans lequel le régulateur d'intensité de fumée comprend :
i) un capuchon (612),
ii) une encoche de verrouillage (616),
iii) une rondelle en acier (618) placée à l'intérieur du capuchon, configurée pour contrôler le dosage de la fumée d'aérosol qui contourne les filtres, et
iv) un joint (642) comprenant une broche (644) configurée pour verrouiller l'encoche.

15. Le système selon l'une quelconque des revendications 6 à 14, comprenant en outre un système de fumée liquide (700) utilisé pour fumer des aliments.
